# EUROPÄISCHE PATENTSCHRIFT

(11) **EP 2 299 098 B1**
(45) Veröffentlichungstag und Bekanntmachung des Hinweises auf die Patenterteilung: **06.09.2017**
(21) Anmeldenummer: 10170799.0
(22) Anmeldetag: 26.07.2010
(51) Int. Cl.: F02G 5/04, F24D 10/00, F24D 11/02

(54) **Anlage zur Bereitstellung von Wärmeenergie**
Installation for heat energy supply
Installation pour alimentation en énergie thermique

(30) Priorität: 07.09.2009 CH 13812009
(43) Veröffentlichungstag der Anmeldung: 23.03.2011
(73) Patentinhaber: W. SCHMID PROJEKTE AG, 8152 Glattbrugg (CH)
(72) Erfinder: Schmid, Walter, 8152 Opfikon (CH)
(74) Vertreter: Feldmann, Clarence Paul

(56) Entgegenhaltungen:
- EP-A2- 0 445 510
- EP-A2- 1 980 804
- DE-A1- 19 535 752
- DE-U1-202005 009 663
- US-A- 4 055 299

## Beschreibung

Die Erfindung betrifft eine Anlage zur Bereitstellung von Wärmeenergie nach Patentanspruch 1 sowie ein Verfahren zum Betrieb einer derartigen Anlage nach Patentanspruch 10. Grundsätzlich besteht ein wachsender Bedarf an Anlagen und Einrichtungen zur effizienten Bereitstellung von Wärmeenergie an Verbraucher wie Wohn- und Geschäftshäuser, Schulen und vielerlei Gebäude öffentlicher oder privater Nutzung, wobei mit einem Minimum an Primärenergie ein Maximum von Energie in Form von Wärme und elektrischem Strom an den Verbraucher abgegeben werden soll. Insbesondere Aspekte der möglichst vollständigen und effizienten Nutzung der verfügbaren Primärenergien (flüssige und gasförmige Treibstoffe, Elektrizität) stehen dabei im Vordergrund. Zur Erreichung dieser Ziele werden häufig Wärmepumpen und Blockheizkraftwerke eingesetzt. Energie aus der Umwelt wird dabei vorzugsweise über Wärmepumpen aus dem Boden, aus der Luft oder aus Wasser bezogen. Wärmepumpen sind eine recht ausgereifte Technologie, sie haben allerdings den Nachteil, dass sie mit grösser werdenden Temperaturunterschieden, also beispielsweise in der kalten Jahreszeit, nur ineffizient betreibbar sind. Primärenergie aus flüssigen und gasförmigen Treibstoffen lässt sich hingegen mit Blockheizkraftwerken besonders effizient in Wärmeenergie und Elektrizität umsetzen. Aus diesen Gründen werden heute zunehmend Kombinationen von Blockheizkraftwerken mit Wärmepumpen eingesetzt, wobei je nach jahreszeitlichen Verhältnissen das Blockheizkraftwerk und die Wärmepumpe einzeln oder im Verbund zur Bereitstellung des Wärmebedarfs dienen. So sind auch Lösungen bekannt, bei denen eine Wärmepumpe die Grundlast für die Versorgung mit Wärmeenergie übernimmt, sofern die Aussentemperaturen einen wirtschaftlichen Betrieb der Wärmepumpe zulassen (SBZ Sanitär-, Heizungs-, Klima- und Klempnertechnik, 13/2009).

Daneben sind auch Bestrebungen im Gange, die Verlustwärme von Blockheizkraftwerken möglichst vollständig zu nutzen, beziehungsweise diese soweit möglich ebenfalls dem Verbraucher zuzuführen. Eine derartige Lösung zeigt beispielsweise die DE-39 12 113. Diese Schrift zeigt ein Blockheizkraftwerk (BHKW) mit Wärmepumpe zur Restwärmeintegration. Dabei geht es um die Einbindung der Abstrahlungsverlustleistungen von Motorblock und Generator in den Heizkreislauf eines Blockheizkraftwerks, das mit einer Verbrennungskraftmaschine ausgerüstet ist, durch eine im Maschinenraum installierte Wärmepumpe.

Die EP-1980804 zeigt ein Verfahren zur Bereitstellung thermischer Energie bei der eine Wärmepumpe durch einen Gasmotor angetrieben wird. Zwar wird die von der Wärmepumpe erzeugte Wärme gemeinsam mit der Abwärme des Gasmotors dem Verbraucher zur Verfügung gestellt, ein Blockheizkraftwerk ist aber nicht vorhanden und ein unabhängiger Betrieb von Gasmotor und Wärmepumpe ist nicht möglich.

Die EP-0445510 zeigt eine Heizungs- und Stromerzeugungsanlage bei der einer Wärmepumpe bei Bedarf ein Brenner mit Wärmetauscher zugeschaltet werden können. Die Anlage hat einen ebenfalls vom Brenner beheizten Stirlingmotor mit einem Lineargenerator zur Stromerzeugung, insgesamt aber kaum Ähnlichkeiten mit gängigen Blockheizkraftwerken. Das Dokument DE 39 12 113 A1 zeigt den Oberbegriff des Anspruchs 1. Blockheizkraftwerke haben natürlich auch Nachteile. Da sie stets auf der Grundlage einer Verbrennungskraftmaschine arbeiten, entstehen auch Lärm und Vibrationen. Bei grösseren Anlagen, insbesondere bei Anlagen, die mit Wärmepumpen kombiniert sind, die die Energie aus der Umgebungsluft beziehen, wird sehr viel Lärm über die Zu- und Abluftkanäle auch nach aussen und in die Umgebung getragen. Es besteht somit grundsätzlich ein Bedarf, Kombianlagen mit Blockheizkraftwerk und Wärmepumpe nicht nur möglichst platzsparend, sondern auch möglichst schall- und vibrationsarm zu bauen.

Gleichzeitig soll auch dem erwähnten Bedarf nach Restwärmeintegration bestmöglich Rechnung getragen werden.

Es ist deshalb Aufgabe der Erfindung, eine Anlage zur Bereitstellung von Wärmeenergie, die ein Blockheizkraftwerk und eine Wärmepumpe umfasst, anzugeben, die in den genannten Bereichen eine Verbesserung bringt. Weiterhin soll auch ein Verfahren zu deren Betrieb angegeben werden.

Diese Aufgabe wird durch die Merkmale des Patenanspruchs 1 gelöst.

Bei einer Anlage zur Bereitstellung von Wärmeenergie mit einer ersten Wärmepumpe zur Deckung eines Grundlastbedarfs an Wärmeenergie und einem Blockheizkraftwerk zur Deckung eines Spitzenlastbedarfs an Wärmeenergie, die in einer Weise zusammengeschaltet sind, dass das Blockheizkraftwerk bei einem festlegbaren Bivalenzpunkt zur ersten Wärmepumpe zuschaltbar ist, ist eine zweite, ausserhalb des Maschinenraums angeordnete Wärmepumpe vorhanden, die mit dem Betrieb des Blockheizkraftwerkes gekoppelt ist und die zur Wärmerückgewinnung aus der Restwärmeleistung des Blockheizkraftwerkes und der ersten Wärmepumpe oder zur Wärmegewinnung aus Aussenluft dient.

Diese Lösung bringt eine Reihe von Vorteilen. Sind das Blockheizkraftwerk mit der ersten Wärmepumpe in einem Maschinenraum angeordnet, so kann ein rein maschinenrauminterner aktiv geförderter Kühlluftkreislauf vorgesehen sein. Das hat den Vorteil, dass die Schallemissionen nach aussen bereits stark reduziert sind, weil es keine nach aussen führenden schallleitenden Lüftungskanäle braucht. Ein weiterer grundsätzlicher Vorteil besteht in der Folge auch darin, dass durch die aktiv belüftete interne Kühlung bessere Wirkungsgrade der einzelnen Komponenten, insbesondere des Generators und der ersten Wärmepumpe, erzielbar sind. Danach erreicht man mit der unabhängigen ausserhalb des Maschinenraums angeordneten zweiten Wärmepumpe auch noch, dass die Hauptteile der Anlage, namentlich das Blockheizkraftwerk und die erste Wärmepumpe sehr kompakt gebaut bzw. angeordnet werden können. Anlagekomponenten, die für sich allein gesehen doch beträchtlichen Platz einnehmen würden, wie der Abgaswärmetauscher für das Blockheizkraftwerk und die zweite Wärmepumpe, die beide jedoch weder aus funktionalen noch aus Gründen übermässig störender Schallemissionen innerhalb des vorzugsweise geschlossenen, schallgedämmten Maschinenraumes angeordnet sein müssen, können so im Sinne einer stark verbesserten Kompaktheit der lärmemissionsintensiven Hauptkomponenten (Blockheizkraftwerk und erste Wärmepumpe), ausserhalb des Maschinenraumes angeordnet sein. Schliesslich hat die Anordnung der zweiten Wärmepumpe ausserhalb des Maschinenraumes den zusätzlichen Vorteil, dass eine grössere Unabhängigkeit im Falle von Störungen besteht.

Die Schallemissionen der Hauptkomponenten (Blockheizkraftwerk und erste Wärmepumpe) können weiter reduziert werden indem die Hauptkomponenten innerhalb des Maschinenraums in einem schalldämmenden Gehäuse angeordnet werden.

Vorzugsweise ist die erfindungsgemässe Anlage somit als Kompaktanlage ausgebildet. Der Begriff "Kompaktanlage" wird im Folgenden in einer Weise interpretiert, dass eine Anordnung von systemswichtigen Komponenten auf relativ kleinem Raum und in einem geschlossenen Raum oder Gehäuse gemeint ist. Das kann bedeuten, dass das Blockheizkraftwerk und die erste Wärmepumpe im Maschinenraum, beispielsweise einem Container oder einem anderen speziell dafür vorgesehenen Betriebsraum, platzsparend und übereinander angeordnet sind. Andere geeignete Anordnungen sind natürlich ebenfalls möglich.

Es ist vorgesehen, dass die zweite Wärmepumpe die Restwärmeleistung des Blockheizkraftwerkes und der ersten Wärmepumpe über einen im Maschinenraum installierten Luftwärmetauscher mit Ventilator aufnimmt. Der Ventilator sorgt dabei für den oben erwähnten maschinenrauminterner aktiv geförderter Kühlluftkreislauf. Der Luftwärmetauscher ist dabei von gängiger Bauart und die zweite Wärmepumpe ist zum Bezug von Wärmeenergie aus dem Sekundärluftkreislauf des Wärmetauschers ausgelegt.

Es kann auch vorgesehen sein, für die zweite Wärmepumpe eine Absorptionswärmepumpe oder eine Elektro-Wärmepumpe einzusetzen.

Es ist auch vorgesehen, dass die zweite Wärmepumpe alternativ zur Wärmerückgewinnung der Restwärmeleistung aus dem Blockheizkraftwerk (2) und der ersten Wärmepumpe (3) oder zur Wärmegewinnung aus der Umgebungsluft (Aussenluft) ausgebildet ist.

Für die Steuerung der Anlage ist vorgesehen, dass das Blockheizkraftwerk zur Abdeckung der Spitzenlast bei einem festlegbaren Bivalenzpunkt zugeschaltet wird, wobei der Bivalenzpunkt in Abhängigkeit von einer definierten Vorlauftemperatur und von den Temperaturen der Primärenergiequellenmedien der ersten und der zweiten Wärmepumpe in einer Weise festgelegt wird, dass die beiden Wärmepumpen mit Jahresarbeitszahlen (JAZ) im Bereich von >2 arbeiten. Es soll ja im Jahresdurchschnitt vermieden werden, dass die erste Wärmepumpe über längere Zeiträume in Bereichen arbeitet, in denen die Leistungszahl (coefficient of performance COP) auf unerwünscht tiefe Werte absinkt. Das ist natürlich besonders im Winterhalbjahr der Fall, weil dann bei steigendem Wärmebedarf wegen der sinkenden Aussentemperaturen auch die Leistungszahl der Wärmepumpe sinkt. Es wird angestrebt, dass die mittlere Vorlauftemperatur der Wärmepumpen etwa 45°C sein sollte.

Das Verfahren zum Betrieb der erfindungsgemässen Anlage sieht demgemäss auch vor, dass die zweite Wärmepumpe derart mit dem Betrieb des Blockheizkraftwerkes gekoppelt ist, dass
- sie bei laufendem Blockheizkraftwerk (2) die Restwärmeleistung des Blockheizkraftwerkes (2) und der ersten Wärmepumpe (3) aufnimmt, und dass
- sie bei nicht-laufendem Blockheizkraftwerk (2) entweder die Restwärmeleistung der ersten Wärmepumpe (3) oder aber Wärmeleistung aus der Umgebungsluft aufnimmt.

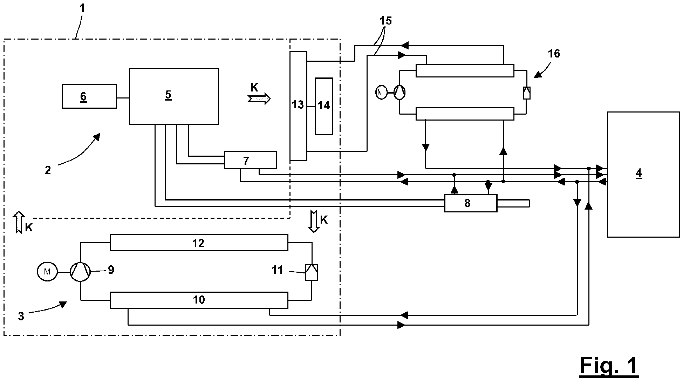

Im folgenden wird ein Ausführungsbeispiel einer Anlage zur Bereitstellung von Wärmeenergie an einen Verbraucher anhand eines Blockschemas beschrieben. Dabei zeigt die
- Fig. 1: ein Blockheizkraftwerk mit einer ersten Wärmepumpe in einem Maschinenraum und einer zweiten Wärmepumpe zur Wärmerückgewinnung aus der Restwärmeleistung des Blockheizkraftwerkes und der ersten Wärmepumpe.

Die Figur 1 zeigt in schematischer Weise einen Maschinenraum 1 (strichpunktierte Linie), in dem ein Blockheizkraftwerk 2 und eine erste Wärmepumpe 3 angeordnet sind. Beide, das Blockheizkraftwerk 2 und die erste Wärmepumpe 3 dienen der Bereitstellung von Wärmeenergie in der Form von Warmwasser an einen Verbraucher, beispielsweise eine Heizung 4.

Das Blockheizkraftwerk 2 umfasst in bekannter Weise einen Motor 5, einen Generator 6, mindestens einen Kühlwasserwärmetauscher 7 und mindestens einen Abgaswärmetauscher 8, wobei der letztere im dargestellten Ausführungsbeispiel ausserhalb des Maschinenraumes 1 angeordnet ist. Das Blockheizkraftwerk 2 ist eine modular aufgebaute Anlage und dient zur Erzeugung von elektrischem Strom und Wärme nach dem Prinzip der Wärme-Kraft bzw. Kraft-Wärme-Kopplung. Als Primärenergie zum Antrieb des Motors dient vorzugsweise ein Gas- oder Flüssigtreibstoff, beispielsweise Flüssiggas, Erdgas oder Biogas, oder im Fall von Flüssigtreibstoff Biodiesel, Ethanol oder ein anderer Treibstoff aus einer erneuerbaren Energiequelle. Mit der Verwendung eines Blockheizkraftwerkes 2 lässt sich bekanntlich gegenüber der herkömmlichen Kombination von lokaler Heizung und zentralem Großkraftwerk ein höherer Gesamtnutzungsgrad erzielen, der aus der Nutzung der Abwärme der Stromerzeugung direkt am Ort der Entstehung resultiert. Durch die ortsnahe Nutzung der Abwärme wird die eingesetzte Primärenergie sehr effizient genutzt, weshalb sich mit Blockheizkraftwerken auch ein relativ hoher Anteil an Primärenergie einsparen lässt. Bei der vorliegenden erfindungsgemässen Anlage steht die Erzeugung und Nutzung von Wärmeenergie im Vordergrund, weshalb die Stromerzeugung mittels des Generators 6 hier nicht weiter und detaillierter ausgeführt ist.

Die erste Wärmepumpe 3 umfasst in bekannter Weise einen motorgetriebenen Verdichter 9, der ein Arbeitsmedium in einem wärmepumpeninternen Kreislauf durch einen Verflüssiger 10, ein Entspannungsventil 11 und einen Verdampfer 12 zirkulieren lässt. Nicht dargestellt ist hier ein Primärmediumskreislauf, beispielsweise ein Solekreislauf zum Bezug von Erdwärme, der mit dem Verdampfer 12 gekoppelt ist. Dargestellt ist hingegen der Sekundärmediumskreislauf, hier ein Warmwasserkreislauf, der mit dem Verflüssiger 10 gekoppelt ist, sowie dessen Vorlauf, der ebenso wie der Vorlauf aus dem Kühlwasserwärmetauscher 7 des Blockheizkraftwerkes 2, der Heizung 4 zugeführt wird. Es ist vorgesehen, dass die erste Wärmepumpe 3 zum Bezug von Wärmeenergie aus der Luft, aus Wasser oder aus der Erde ausgebildet sein kann.

Weiterhin ist innerhalb des Maschinenraumes 1 ein Wärmerückgewinnungs-(WRG-) Wärmetauscher 13 sowie ein Ventilator 14 vorgesehen. Der Ventilator 14 dient dazu, einen maschinenraumintern aktiv geförderten Kühlluftkreislauf K zu erzeugen. Mit dem Kühlluftkreislauf K werden die bisher erwähnten restwärmeabgebenden Anlagekomponenten im Maschinenraum gekühlt. Die Kühlluft nimmt dabei die Restwärme des Blockheizkraftwerkes 2 und der ersten Wärmepumpe 3 auf. In der Folge wird die Restwärme dann im WRG-Wärmetauscher 13 an einen Kühlfluid-Kreislauf 15 abgegeben und so einer ausserhalb des Maschinenraumes angeordneten zweiten Wärmepumpe 16 zugeführt. Das Kühlfluid des Kühlfluid-Kreislaufes 15 ist dabei vorzugsweise ein Wasser-Ethylenglykol Gemisch.

Die Hauptkomponenten innerhalb des Maschinenraumes 1 sind also das Blockheizkraftwerk 2 und die erste Wärmepumpe 3. Dabei ist die erste Wärmepumpe 3 im Vergleich zur extern angeordneten zweiten Wärmepumpe 16 natürlich grösser und leistungsfähiger - sie ist ja auch dazu vorgesehen, eine Grundlast des Wärmebedarfes der Heizung 4 im Jahresverlauf zu decken. Deshalb ist der zugehörige Verdichter 9 mit Antriebsmotor auch vergleichsweise grösser und erzeugt im Betrieb auch einiges mehr an Verlustwärme. Es macht deshalb Sinn, beide Hauptkomponenten mit dem Kühlluftkreislauf K zu kühlen und so deren Wirkungsgrad zu steigern. Vorteilhafterweise sind auch das Blockheizkraftwerk 2 und die erste Wärmepumpe 3 jeweils in separaten, schalldämmenden Gehäusen (angedeutet mit strichlierten Linien) untergebracht. Zudem sind das Blockheizkraftwerk 2 und die erste Wärmepumpe 3 vorzugsweise platzsparend übereinander angeordnet. Die erfindungsgemässe Anlage, jedenfalls zumindest das Blockheizkraftwerk 2 zusammen mit der ersten Wärmepumpe 3, ist deshalb sehr gut als Kompaktanlage ausbildbar.

Die Tatsache, dass der Abgaswärmetauscher 8 ausserhalb des Maschinenraums 1 angeordnet ist, ist darauf zurückzuführen, dass es zumeist ein relativ voluminöses Apparateteil ist, das aber keine nennenswerten Lärmemissionen erzeugt, und da die Abgase ohnehin nach aussen geführt werden müssen, lässt sich die Anlage noch kompakter bauen. Wie aus der Fig. 1 ersichtlich, wird der Vorlauf aus dem Abgaswärmetauscher 8 des Blockheizkraftwerkes 2 ebenfalls der Heizung 4 zugeführt.

Die zweite Wärmepumpe 16 ist hier in ihrer Grundstruktur gleich dargestellt wie die erste Wärmepumpe 3, weshalb sich weitere Ausführungen dazu an dieser Stelle erübrigen. Die zweite Wärmepumpe 16 ist jedoch mit dem Betrieb des Blockheizkraftwerkes 2 gekoppelt ist und dient, wie erwähnt, zur Wärmerückgewinnung aus der Restwärmeleistung des Blockheizkraftwerkes und der ersten Wärmepumpe 3. Bei laufendem Blockheizkraftwerk 2 ist somit immer auch die zweite Wärmepumpe 16 im Betrieb. Bei nicht-laufendem Blockheizkraftwerk kann die zweite Wärmepumpe 16 zur Unterstützung der ersten Wärmepumpe 3 eingesetzt werden. In diesem Fall wird die zweite Wärmepumpe 16 zur Gewinnung von Wärme aus der Aussenluft umgeschaltet (in der Figur nicht dargestellt).

Die zweite Wärmepumpe 16 ist, wie erwähnt, vorzugsweise zum Bezug von Wärmeenergie aus einem Wasser-Ethylenglykol Gemisch ausgelegt, es könnte grundsätzlich aber auch ein anderes Fluid (gasförmiges oder flüssiges Medium) zum Einsatz gelangen. Ebenso könnte die zweite Wärmepumpe 16 auch als Absorptions-Wärmepumpe oder als Elektro-Wärmepumpe ausgelegt sein, um Lärm- und Vibrationseffekte noch weiter zu reduzieren. Wie aus der Fig. 1 ersichtlich, wird der Vorlauf aus der zweiten Wärmepumpe 16 ebenfalls der Heizung 4 zugeführt.

Die erfindungsgemässe Anlage zur Bereitstellung von Wärmeenergie an einen Verbraucher wird grundsätzlich wie folgt betrieben:
- die Grundlast an Wärmeenergie wird von der ersten Wärmepumpe 3 oder einer Kombination der ersten und einer zweiten Wärmepumpe (3,16) bereitgestellt,
- die Spitzenlast an Wärmeenergie wird von dem Blockheizkraftwerk 2 bereitgestellt,
- das Blockheizkraftwerk 2 wird zur Abdeckung der Spitzenlast bei einem festlegbaren Bivalenzpunkt zugeschaltet, wobei der Bivalenzpunkt in Abhängigkeit von einer definierten Vorlauftemperatur und von den Temperaturen der Primärenergiequellenmedien der ersten und der zweiten Wärmepumpe 3,16 in einer Weise festgelegt wird, dass die beiden Wärmepumpen 3,16 mit Jahresarbeitszahlen (JAZ) im Bereich von >2 arbeiten.

Vereinfacht dargestellt, kann somit davon ausgegangen werden, dass die Grundlast der Wärmeenergie für Gebäudeheizung und Warmwassererwärmung bis zu einer definierten Vorlauftemperatur hauptsächlich über die erste Wärmepumpe 3 bereitstellbar ist, während die Spitzenlast der Wärmeenergie für Gebäudeheizung und Warmwassererwärmung für benötigte Vorlauftemperaturen, die über die definierte Vorlauftemperatur hinausgehen, über das dazugeschaltete Blockheizkraftwerk 2 bereitstellbar ist.

Zudem ist, wie bereits früher erwähnt, die zweite Wärmepumpe 16 derart ausgelegt, dass sie auch zur Unterstützung der ersten Wärmepumpe 3 einsetzbar ist. Grundsätzlich ist die Anlage auch so ausgelegt, dass das Blockheizkraftwerk 2 und die erste Wärmepumpe 3 unabhängig voneinander betreibbar sind. Das heisst, dass grundsätzlich das Blockheizkraftwerk 2 allein oder die erste Wärmepumpe 3 allein (oder allenfalls zusammen mit der zweiten Wärmepumpe 16) zur Wärmeversorgung eingesetzt werden können.

Bezugsziffernliste:
- 1: Maschinenraum
- 2: Blockheizkraftwerk
- 3: erste Wärmepumpe
- 4: Heizung
- 5: Motor
- 6: Generator
- 7: Kühlwasserwärmetauscher
- 8: Abgaswärmetauscher
- 9: Verdichter
- 10: Verflüssiger
- 11: Entspannungsventil
- 12: Verdampfer
- 13: WRG (Wärmerückgewinnungs-) Wärmetauscher
- 14: Ventilator
- 15: Kühlfluid-Kreislauf
- 16: zweite Wärmepumpe

- K: Kühlluftkreislauf

## Patentansprüche

1. Anlage zur Bereitstellung von Wärmeenergie an einen Verbraucher, mit einem Maschinenraum (1) und mit einem Gas- oder Flüssigtreibstoff - angetriebenen Blockheizkraftwerk (2) mit mindestens je einem Wärmetauscher zur Übernahme der Kühlwasserwärme aus dem Motorblock des Blockheizkraftwerks (2) und der Abgaswärme des Blockheizkraftwerks (2) in einen Heizkreislauf, wobei die Anlage eine erste Wärmepumpe (3) umfasst, und wobei die erste Wärmepumpe (3) zur Bereitstellung einer Grundlast an Wärmeenergie und das Blockheizkraftwerk (2) zur Bereitstellung einer Spitzenlast an Wärmeenergie an den Verbraucher ausgelegt ist, wobei das Blockheizkraftwerk (2) bei einem festlegbaren Bivalenzpunkt der ersten. Wärmepumpe zuschaltbar ist, **dadurch gekennzeichnet, dass** eine zweite, ausserhalb des Maschinenraums (1) angeordnete Wärmepumpe (16) und innerhalb des Maschinenraumes (1)
ein Ventilator (14) zur Erzeugung eines Kühlluftkreislaufs (K) sowie ein Wärmerückgewinnungs-Wärmetauscher (13) zur Abgabe von Restwärme an einen Kühlfluid-Kreislauf (15) vorhanden sind, die zur Wärmerückgewinnung aus der Restwärmeleistung des Blockheizkraftwerkes (2) und der ersten Wärmepumpe (3) dienen, wobei die zweite Wärmepumpe (16) die Restwärmeleistung des Blockheizkraftwerkes (2) und der ersten Wärmepumpe (3) über den Luftwärmetauscher (13) mit dem Ventilator (14) aufnehmen kann.

2. Anlage nach Patentanspruch 1, **dadurch gekennzeichnet, dass** die zweite Wärmepumpe zur Wärmegewinnung aus Aussenluft dient.

3. Anlage nach Patentanspruch 2, **dadurch gekennzeichnet, dass** das Blockheizkraftwerk (2) und die erste Wärmepumpe (3) im Maschinenraum (1), beispielsweise einem Container oder einem anderen speziell dafür vorgesehenen Betriebsraum, vorzugsweise platzsparend übereinander in einem schalldämmenden Gehäuse angeordnet sind.

4. Anlage nach einem der Patentansprüche 1 bis 3, **dadurch gekennzeichnet, dass** das Blockheizkraftwerk (2) und die erste Wärmepumpe (3) gemeinsam oder unabhängig voneinander betreibbar sind.

5. Anlage nach einem der Patentansprüche 1 bis 4, **dadurch gekennzeichnet, dass** die zweite Wärmepumpe (16) derart mit dem Betrieb des Blockheizkraftwerkes (2) gekoppelt ist, dass
- sie bei laufendem Blockheizkraftwerk (2) zur Aufnahme der Restwärmeleistung aus dem Blockheizkraftwerk (2) und der ersten Wärmepumpe (3) ausgebildet ist, und dass
- sie bei nicht-laufendem Blockheizkraftwerk (2) entweder zur Aufnahme der Restwärmeleistung aus der ersten Wärmepumpe (3) oder zur Aufnahme von Wärmeleistung aus der Umgebungsluft ausgebildet ist.

6. Anlage nach einem der Patentansprüche 1 bis 5, **dadurch gekennzeichnet, dass** die Grundlast der Wärmeenergie für Gebäudeheizung und Warmwassererwärmung bis zu einer definierten Vorlauftemperatur über die erste Wärmepumpe (3) oder eine Kombination der ersten und der zweiten Wärmepumpe (3, 16) bereitstellbar ist, und die Spitzenlast der Wärmeenergie für Gebäudeheizung und Warmwassererwärmung für benötigte Vorlauftemperaturen, die über die definierte Vorlauftemperatur hinausgehen, über das dazugeschaltete Blockheizkraftwerk (2) bereitstellbar ist.

7. Anlage nach einem der Patentansprüche 1 bis 6, **dadurch gekennzeichnet, dass** die erste Wärmepumpe (3) zum Bezug von Wärmeenergie aus der Luft, aus Wasser oder aus der Erde vorgesehen ist.

8. Anlage nach einem der Patentansprüche 1 bis 7, **dadurch gekennzeichnet, dass** die zweite Wärmepumpe (16) zum Bezug von Wärmeenergie aus Kühlluft oder Umgebungsluft ausgelegt ist.

9. Anlage nach einem der Patentansprüche 1 bis 8, **dadurch gekennzeichnet, dass** die zweite Wärmepumpe (16) eine Absorptions-Wärmepumpe ist.

10. Verfahren zum Betrieb einer Anlage nach Patentanspruch 1 zur Bereitstellung von Wärmeenergie an einen Verbraucher,
wobei
**dadurch gekennzeichnet, dass**
- eine Grundlast an Wärmeenergie von der ersten Wärmepumpe (3) oder einer Kombination der ersten und der zweiten Wärmepumpe (3,16) bereitgestellt wird,
- eine Spitzenlast an Wärmeenergie vom Blockheizkraftwerk (2) bereitgestellt wird,
- und das Blockheizkraftwerk (2) zur Abdeckung der Spitzenlast bei einem festlegbaren Bivalenzpunkt der ersten Wärmepumpe (3) zugeschaltet wird, wobei der Bivalenzpunkt in Abhängigkeit von einer definierten Vorlauftemperatur und von den Temperaturen der Primärenergiequellenmedien der ersten und der zweiten Wärmepumpe (3,16) festgelegt wird.

11. Verfahren nach Patentanspruch 10, **dadurch gekennzeichnet, dass** die zweite Wärmepumpe (16) derart mit dem Betrieb des Blockheizkraftwerkes (2) gekoppelt ist, dass
- sie bei laufendem Blockheizkraftwerk (2) die Restwärmeleistung des Blockheizkraftwerkes (2) und der ersten Wärmepumpe (3) aufnimmt, und dass
- sie bei nicht-laufendem Blockheizkraftwerk (2) entweder die Restwärmeleistung der ersten Wärmepumpe (3) oder aber Wärmeleistung aus der Umgebungsluft aufnimmt.

## Claims

1. Installation for supplying heat energy to a consumer comprising a machine chamber (1) and comprising a gas or liquid fuel-driven cogeneration unit (2), with at least one respective heat exchanger to transfer the cooling water heat from the engine block of the cogeneration unit (2) and the waste heat of the cogeneration unit (2) into a heating circuit, wherein the installation comprises a first heat pump (3) and wherein the first heat pump (3) is designed to supply a base load of heat energy and the cogeneration unit (2) is designed to supply a peak load of heat energy to the consumer, wherein the cogeneration unit (2) is able to be connected into the system when a bivalence point of the first heat pump is able to be established,
**characterised in that** a second heat pump (16) arranged outside the machine chamber (1) and, inside the machine chamber (1), a fan (14) for producing a cool air circuit (K) and a heat recovery heat exchanger (13) for discharging residual heat to a coolant circuit (15), which serve for the recovery of heat from the residual heat output of the cogeneration unit (2) and the first heat pump (3), are present, wherein the second heat pump (16) is able to absorb the residual heat output of the cogeneration unit (2) and the first heat pump (3) via the air heat exchanger (13) with the fan (14).

2. Installation according to Claim 1, **characterised in that** the second heat pump serves for producing heat from external air.

3. Installation according to Claim 2, **characterised in that** the cogeneration unit (2) and the first heat pump (3) in the machine chamber (1), for example a container or a different operating chamber provided specifically therefor, are preferably arranged one above the other in a space-saving manner in a sound-insulating housing.

4. Installation according to one of Claims 1 to 3, **characterised in that** the cogeneration unit (2) and the first heat pump (3) are able to be operated together or independently of one another.

5. Installation according to one of Claims 1 to 4, **characterised in that** the second heat pump (16) is coupled to the operation of the cogeneration unit (2), such that
- when the cogeneration unit (2) is running, said second heat pump is configured to absorb the residual heat output from the cogeneration unit (2) and the first heat pump (3) and that
- when the cogeneration unit (2) is not running, said second heat pump is configured either to absorb the residual heat output from the first heat pump (3) or to absorb heat from the ambient air.

6. Installation according to one of Claims 1 to 5, **characterised in that** the base load of the heat energy is able to be supplied for heating buildings and heating warm water up to a defined flow temperature via the first heat pump (3) or a combination of the first and the second heat pumps (3, 16), and the peak load of the heat energy is able to be supplied for heating buildings and heating warm water for required flow temperatures which exceed the defined flow temperature via the cogeneration unit (2) connected thereto.

7. Installation according to one of Claims 1 to 6, **characterised in that** the first heat pump (3) is provided for obtaining heat energy from the air, from water or from the ground.

8. Installation according to one of Claims 1 to 7, **characterised in that** the second heat pump (16) is designed to obtain heat energy from cool air or ambient air.

9. Installation according to one of Claims 1 to 8, **characterised in that** the second heat pump (16) is an absorption heat pump.

10. Method for operating an installation according to Claim 1 for supplying heat energy to a consumer, wherein
**characterised in that**
- a base load of heat energy is supplied from the first heat pump (3) or a combination of the first and the second heat pumps (3, 16),
- a peak load of heat energy is supplied by the cogeneration unit (2),
- and the cogeneration unit (2) is connected into the system for covering the peak load when a bivalence point of the first heat pump (3) is able to be established, wherein the bivalence point is fixed according to a defined flow temperature and according to the temperatures of the primary energy source media of the first and the second heat pumps (3, 16).

11. Method according to Claim 10, **characterised in that** the second heat pump (16) is coupled to the operation of the cogeneration unit (2), such that
- when the cogeneration unit (2) is running, said second heat pump absorbs the residual heat output of the cogeneration unit (2) and the first heat pump (3) and that
- when the cogeneration unit (2) is not running, said second heat pump absorbs either the residual heat output of the first heat pump (3) or heat from the ambient air.

## Revendications

1. Installation pour fournir de l'énergie thermique à un consommateur avec un local machines (1) et avec une centrale de cogénération (2) actionnée par un combustible gazeux ou liquide avec au moins respectivement un échangeur de chaleur pour prendre en charge la chaleur d'eau de refroidissement du bloc moteur de la centrale de cogénération (2) et la chaleur des gaz brûlés de la centrale de cogénération (2) dans un circuit de chauffage, l'installation comprenant une première pompe à chaleur (3) et la première pompe à chaleur (3) étant conçue pour fournir une charge de base en énergie thermique et la centrale de cogénération (2) pour fournir une charge de pointe en énergie thermique au consommateur, la centrale de cogénération (2) pouvant être raccordée à la première pompe à chaleur pour un point de bivalence pouvant être déterminé, **caractérisée en ce qu'**il y a une deuxième pompe à chaleur (16) disposée en dehors du local machines (1) et à l'intérieur du local machines (1) un ventilateur (14) pour produire un circuit d'air froid (K) ainsi qu'un échangeur de chaleur à récupération de chaleur (13) pour diffusion de la chaleur résiduelle à un circuit de fluide de refroidissement (15), qui servent à la récupération de chaleur de la puissance calorifique résiduelle de la centrale de cogénération (2) et de la première pompe à chaleur (3), la deuxième pompe à chaleur (16) pouvant recevoir la puissance calorifique résiduelle de la centrale de cogénération (2) et de la première pompe à chaleur (3) par le biais de l'échangeur de chaleur d'air (13) avec le ventilateur (14) .

2. Installation selon la revendication 1, **caractérisée en ce que** la deuxième pompe à chaleur sert à la récupération de chaleur de l'air extérieur.

3. Installation selon la revendication 2, **caractérisée en ce que** la centrale de cogénération (2) et la première pompe à chaleur (3) sont disposées dans le local machines (1), par exemple un conteneur ou un autre local d'exploitation spécialement prévu à cet effet, de préférence de manière peu encombrante l'une sur l'autre dans un coffrage insonorisant.

4. Installation selon l'une quelconque des revendications 1 à 3, **caractérisée en ce que** la centrale de cogénération (2) et la première pompe à chaleur (3) peuvent être exploitées en commun ou indépendamment l'une de l'autre.

5. Installation selon l'une quelconque des revendications 1 à 4, **caractérisée en ce que** la deuxième pompe (16) est couplée au fonctionnement de la centrale de cogénération (2) de telle sorte qu'
- elle est constituée avec la centrale de cogénération (2) en fonctionnement pour recevoir la puissance calorifique résiduelle de la centrale de cogénération (2) et de la première pompe à chaleur (3), et **en ce qu'**
- elle est constituée avec la centrale de cogénération (2) ne fonctionnant pas soit pour recevoir la puissance calorifique résiduelle de la première pompe à chaleur (3) soit pour recevoir de la puissance calorifique de l'air ambiant.

6. Installation selon l'une quelconque des revendications 1 à 5, **caractérisée en ce que** la charge de base de l'énergie thermique pour le chauffage d'immeubles et le chauffage de l'eau chaude jusqu'à une température de départ définie peut être fournie par la première pompe à chaleur (3) ou une combinaison de la première et de la deuxième pompe à chaleur (3,16) et la charge de pointe de l'énergie thermique pour le chauffage d'immeubles et le chauffage de l'eau chaude pour les températures de départ nécessaires, dépassant la température de départ définie, peut être fournie par la centrale de cogénération (2) connectée à cet effet.

7. Installation selon l'une quelconque des revendications 1 à 6, **caractérisée en ce que** la première pompe à chaleur (3) est prévue pour obtenir de l'énergie thermique à partir de l'air, de l'eau ou de la terre.

8. Installation selon l'une quelconque des revendications 1 à 7, **caractérisée en ce que** la deuxième pompe (16) est conçue pour obtenir de l'énergie thermique à partir de l'air froid ou de l'air ambiant.

9. Installation selon l'une quelconque des revendications 1 à 8, **caractérisée en ce que** la deuxième pompe (16) est une pompe à chaleur par absorption.

10. Procédé pour faire fonctionner une installation selon la revendication 1 pour fournir de l'énergie thermique à un consommateur,
**caractérisé en ce que**
- une charge de base en énergie thermique est fournie par la première pompe à chaleur (3) ou une combinaison de la première et de la deuxième pompe à chaleur (3,16),
- une charge de pointe en énergie thermique est fournie par la centrale de cogénération (2),
- et la centrale de cogénération (2) est raccordée à la première pompe à chaleur (3) pour couvrir la charge de pointe à un point de bivalence pouvant être défini,
le point de bivalence étant défini en fonction d'une température de départ définie et des températures des milieux de source d'énergie primaire de la première et de la deuxième pompe à chaleur (3,16).

11. Procédé selon la revendication 10, **caractérisé en ce que** la deuxième pompe à chaleur (16) est couplée au fonctionnement de la centrale de cogénération (2) de telle manière qu'
- elle reçoit avec la centrale de cogénération (2) en fonctionnement la puissance calorifique résiduelle de la centrale de cogénération (2) et de la première pompe à chaleur (3) et **en ce qu'**
- elle reçoit avec la centrale de cogénération (2) ne fonctionnant pas, soit la puissance calorifique résiduelle de la première pompe à chaleur (3), ou bien de la puissance calorifique venant de l'air ambiant.
